# EUROPEAN PATENT SPECIFICATION

(11) **EP 2 291 805 B1**
(45) Date of publication and mention of the grant of the patent: **11.07.2018**
(21) Application number: 09758934.5
(22) Date of filing: 12.05.2009
(51) Int. Cl.: G06Q 30/02

(54) **SYSTEM AND METHOD FOR A VIRAL MARKETING CAMPAIGN WITH A COMMON GOAL**
SYSTEM UND VERFAHREN FÜR EINE VIRALE MARKETING-CAMPAIGN MIT ENEM GEMEINSAMEN ZIEL
SYSTÈME ET PROCÉDÉ POUR UNE CAMPAGNE DE BOUCHE À OREILLE ÉLECTRONIQUE À OBJECTIF COMMUN

(30) Priority: 29.05.2008 US 129328
(43) Date of publication of application: 09.03.2011
(73) Proprietor: QUALCOMM Incorporated, San Diego, CA 92121 (US)
(72) Inventor: CAUNTER, Mark, Leslie, San Diego CA 92121 (US)
(74) Representative: Dunlop, Hugh Christopher
(86) International application number: PCT/US2009/043553
(87) International publication number: WO 2009/148771

(56) References cited:
- US-A1- 2007 288 395
- US-A1- 2008 052 242
- US-A1- 2008 091 517
- 'Proceedings of the 6th International Conference on Mobile Business [online], July, 2007 [retrieved on 2010-01-15].', article POUSTTCHI, K. ET AL.: 'D.G. Success Factors in Mobile Viral Marketing: A Multi-Case Study Approach.', XP031119408

## Description

### FIELD

The present invention generally relates to wireless devices and, more particularly, to deploying a viral marketing campaign.

### DESCRIPTION OF THE RELATED ART

Viral marketing campaigns are growing in popularity among large media advertising companies. As viral marketing campaigns become more pervasive, new forms of viral marketing campaigns need to be developed to reach even more consumers. US2008052242 discloses systems and methods for distributing graphic assets among users of personal communication devices. A method includes providing an authorized first user with an authoring version of the graphic asset. The authoring version allows the first user to morph the graphic asset and use the graphic asset to send a message to a second user.

### SUMMARY OF THE INVENTION

In one aspect, a method of executing a campaign application is presented. The method comprises receiving the campaign application on a first wireless device. The campaign application may be a plurality of parts, which may have at least a first part and a second part. The first part may be operable to be executed on the first wireless device, and the second part may be operable to be executed on a second wireless device. After completing the first part of the plurality of parts, the first wireless device may be prevented from executing the second part of the plurality of parts. In addition, the first or second wireless device may be operable to receive a reward when each part of the plurality of parts is completed. The method may further comprise completing the first part of the plurality of parts on the first wireless device, and transmitting a first campaign application information to the second wireless device. The first campaign application information may indicate that the first part of the plurality of parts is completed. Also, the first campaign application information may be associated with the campaign application. The method may further comprise receiving a milestone reward at the first wireless device when the first part of the plurality of parts is completed on the first wireless device. Further, the method may comprise transmitting the campaign application to the second wireless device based on the first campaign application information. In addition, the method may further comprise completing the second part of the plurality of parts on the second wireless device, transmitting a second campaign application information, and receiving the reward at the first or second wireless device when every part of the plurality of parts is completed. The second campaign application information may indicate that the second part of the plurality of parts is completed.

In another aspect, a system of executing a campaign application is presented. The system comprises means for receiving the campaign application on a first wireless device. The campaign application may be a plurality of parts, which may have at least a first part and a second part. The first part may be operable to be executed on the first wireless device, and the second part may be operable to be executed on a second wireless device. After completing the first part of the plurality of parts, the first wireless device may be prevented from executing the second part of the plurality of parts. In addition, the first or second wireless device may be operable to receive a reward when each part of the plurality of parts is completed. The system may further comprise means for completing the first part of the plurality of parts on the first wireless device, and means for transmitting a first campaign application information to the second wireless device. The first campaign application information may indicate that the first part of the plurality of parts is completed. Also, the first campaign application information may be associated with the campaign application. The system may further comprise means for receiving a milestone reward at the first wireless device when the first part of the plurality of parts is completed on the first wireless device. Further, the system may comprise means for transmitting the campaign application to the second wireless device based on the first campaign application information. In addition, the system may further comprise means for completing the second part of the plurality of parts on the second wireless device, means for transmitting a second campaign application information, and means for receiving the reward at the first or second wireless device when every part of the plurality of parts is completed. The second campaign application information may indicate that the second part of the plurality of parts is completed.

In another aspect, a computer program product comprising a computer-readable medium is presented. The computer-readable medium comprises at least one instruction for receiving a campaign application on a first wireless device. The campaign application may be a plurality of parts, which may have at least a first part and a second part. The first part may be operable to be executed on the first wireless device, and the second part may be operable to be executed on a second wireless device. After completing the first part of the plurality of parts, the first wireless device may be prevented from executing the second part of the plurality of parts. In addition, the first or second wireless device may be operable to receive a reward when each part of the plurality of parts is completed. The computer-readable medium may further comprise at least one instruction for completing the first part of the plurality of parts on the first wireless device, and at least one instruction for transmitting a first campaign application information to the second wireless device. The first campaign application information may indicate that the first part of the plurality of parts is completed. Also, the first campaign application information may be associated with the campaign application. The computer-readable medium may further comprise at least one instruction for receiving a milestone reward at the first wireless device when the first part of the plurality of parts is completed on the first wireless device. Further, the computer-readable medium may comprise at least one instruction for transmitting the campaign application to the second wireless device based on the first campaign application information. In addition, the computer-readable medium may further comprise at least one instruction for completing the second part of the plurality of parts on the second wireless device, at least one instruction for transmitting a second campaign application information, and at least one instruction for receiving the reward at the first or second wireless device when every part of the plurality of parts is completed. The second campaign application information may indicate that the second part of the plurality of parts is completed.

In another aspect, a first wireless device is presented. The first wireless device comprises a transceiver, a memory, and a processor. The transceiver may be operable to transmit and receive a campaign application, a first campaign application information, or a reward. The memory may be operable to store the campaign application, the first campaign application information, or the reward. The processor may be operable to execute the campaign application. The campaign application may have a plurality of parts, which has at least a first part and a second part. The first part may be operable to be executed on the first wireless device by the processor, and the second part may be operable to be executed on a second wireless device. Further, after completing the first part of the plurality of parts, the first wireless device may be prevented from executing the second part of the plurality of parts. The first or second wireless device may be operable to receive the reward when each part of the plurality of parts is completed. The processor may be further operable to complete the first part of the plurality of parts on the first wireless device, and transmit a first campaign application information to the second wireless device via the transceiver. The first campaign application information may indicate that the first part of the plurality of parts is completed. In addition, the first campaign application information may be associated with the campaign application. The processor may be further operable to receive a milestone reward using the transceiver when the first part of the plurality of parts is completed on the first wireless device. In addition, the processor may be further operable to transmit the campaign application to the second wireless device based on the first campaign application information. The reward may be received at the first wireless device when every part of the plurality of parts is completed.

In another aspect, a method of executing a campaign application is presented. The method may comprise transmitting the campaign application to a first wireless device. The campaign application may have a plurality of parts, which has at least a first part and a second part. The first part may be operable to be executed on the first wireless device, and the second part may be operable to be executed on a second wireless device. After completing the first part of the plurality of parts, the first wireless device may be prevented from executing the second part of the plurality of parts. The first or second wireless device may be operable to receive a reward when each part of the plurality of parts is completed. The method may further comprise receiving a first campaign application information from the first wireless device after the first part of the plurality of parts has been completed by the first wireless device. The first campaign application information may indicate that the first part of the plurality of parts is completed. Also, the first campaign application information may be associated with the campaign application. Further, the method may comprise storing the first campaign application information. In addition, the method may comprise transmitting a milestone reward to the first wireless device when the first part of the plurality of parts is completed on the first wireless device. The method may further comprise transmitting the first campaign application information to the second wireless device, and receiving a second campaign application information from the second wireless device after the second wireless device has completed the second part of the plurality of parts. The second campaign application information may indicate that the second part of the plurality of parts is completed. Also, the second campaign application information may be associated with the campaign application. The method may further comprise transmitting the reward to the first or second wireless device when every part of the plurality of parts is completed.

In another aspect, a system of executing a campaign application is presented. The system may comprise means for transmitting the campaign application to a first wireless device. The campaign application may have a plurality of parts, which has at least a first part and a second part. The first part may be operable to be executed on the first wireless device, and the second part may be operable to be executed on a second wireless device. After completing the first part of the plurality of parts, the first wireless device may be prevented from executing the second part of the plurality of parts. The first or second wireless device may be operable to receive a reward when each part of the plurality of parts is completed. The system may further comprise means for receiving a first campaign application information from the first wireless device after the first part of the plurality of parts has been completed by the first wireless device. The first campaign application information may indicate that the first part of the plurality of parts is completed. Also, the first campaign application information may be associated with the campaign application. Further, the system may comprise means for storing the first campaign application information. In addition, the system may comprise means for transmitting a milestone reward to the first wireless device when the first part of the plurality of parts is completed on the first wireless device. The system may further comprise transmitting the first campaign application information to the second wireless device, and means for receiving a second campaign application information from the second wireless device after the second wireless device has completed the second part of the plurality of parts. The second campaign application information may indicate that the second part of the plurality of parts is completed. Also, the second campaign application information may be associated with the campaign application. The system may further comprise means for transmitting the reward to the first or second wireless device when every part of the plurality of parts is completed.

In another aspect, a computer program product comprising a computer-readable medium is presented. The computer-readable medium may comprise at least one instruction for transmitting a campaign application to a first wireless device. The campaign application may have a plurality of parts, which has at least a first part and a second part. The first part may be operable to be executed on the first wireless device, and the second part may be operable to be executed on a second wireless device. After completing the first part of the plurality of parts, the first wireless device may be prevented from executing the second part of the plurality of parts. The first or second wireless device may be operable to receive a reward when each part of the plurality of parts is completed. The computer-readable medium may further comprise at least one instruction for receiving a first campaign application information from the first wireless device after the first part of the plurality of parts has been completed by the first wireless device. The first campaign application information may indicate that the first part of the plurality of parts is completed. Also, the first campaign application information may be associated with the campaign application. Further, the computer-readable medium may comprise at least one instruction for storing the first campaign application information. In addition, the computer-readable medium may comprise at least one instruction for transmitting a milestone reward to the first wireless device when the first part of the plurality of parts is completed on the first wireless device. The computer-readable medium may further comprise transmitting the first campaign application information to the second wireless device, and at least one instruction for receiving a second campaign application information from the second wireless device after the second wireless device has completed the second part of the plurality of parts. The second campaign application information may indicate that the second part of the plurality of parts is completed. Also, the second campaign application information may be associated with the campaign application. The computer-readable medium may further comprise at least one instruction for transmitting the reward to the first or second wireless device when every part of the plurality of parts is completed.

In another aspect, a server for processing a campaign application is presented. The server comprises a transceiver, a memory, and a processor. The transceiver may be operable to transmit and receive a campaign application, a first campaign application information, a second campaign information, or a reward. The memory may be operable to store the campaign application, the first campaign application information, the second campaign information or the reward. The processor may be operable to transmit the campaign application to a first wireless device. The campaign application may have a plurality of parts, which has at least a first part and a second part. The first part may be operable to be executed on the first wireless device, and the second part may be operable to be executed on a second wireless device. After completing the first part of the plurality of parts, the first wireless device may be prevented from executing the second part of the plurality of parts. The first or second wireless device may be operable to receive a reward when each part of the plurality of parts is completed. Also, the server may be further operable to receive a first campaign application information from the first wireless device after the first part of the plurality of parts has been completed by the first wireless device. The first campaign application information may indicate that the first part of the plurality of parts is completed. In addition, the first campaign application information may be associated with the campaign application, and may store the first campaign application information in the memory. Also, the processor may be further operable to transmit a milestone reward to the first wireless device using the transceiver when the first part of the plurality of parts is completed on the first wireless device. Further, the processor may be operable to transmit the first campaign application information to the second wireless device using the transceiver, and receive a second campaign application information from the second wireless device using the transceiver after the second wireless device has completed the second part of the plurality of parts. Further, the second campaign application information may indicate that the second part of the plurality of parts is completed. Also, the second campaign application information may be associated with the campaign application. The server may be further operable to transmit the reward to the first or second wireless device using the transceiver when every part of the plurality of parts is completed.

Additional aspects will be apparent in the foregoing description and equivalents thereof.

### BRIEF DESCRIPTION OF THE DRAWINGS

In the figures, like reference numerals refer to like parts throughout the various views unless otherwise indicated.
FIG. 1 is a block diagram of a viral marketing system;
FIG. 2 is a flowchart depicting a process of participating in a viral marketing campaign;
FIG. 3 is a yet another flowchart depicting a process of participating in a viral marketing campaign;
FIG. 4 is call-flow diagram illustrating a process of participating in a viral marketing campaign; and
FIG. 5 is a block diagram depicting a detailed view of a wireless device and a campaign server.

### DETAILED DESCRIPTION

The word "exemplary" is used herein to mean "serving as an example, instance, or illustration." Any aspect described herein as "exemplary" is not necessarily to be construed as preferred or advantageous over other aspects.

In this description, the term "application" or "app" may also include files having executable content, such as: object code, scripts, byte code, markup language files, and patches. In addition, an "application" referred to herein, may also include files that are not executable in nature, such as documents that may need to be opened or other data files that need to be accessed.

As used in this description, the terms "component," "module," "system," and the like are intended to refer to a computer-related entity, either hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device may be a component. One or more components may reside within a process and/or thread of execution, and a component may be localized on one computer and/or distributed between two or more computers. In addition, these components may execute from various computer readable media having various data structures stored thereon. The components may communicate by way of local and/or remote processes such as in accordance with a signal having one or more data packets (*e.g.,* data from one component interacting with another component in a local system, a distributed system, and/or across a network such as the Internet with other systems by way of the signal).

In this description, the terms "communication device," "wireless device," "wireless telephone," "wireless communications device," and "wireless handset" are used interchangeably. A wireless device could be a cellular telephone, a pager, a personal digital assistant ("PDA"), a smartphone, a navigation device, or a computer with a wireless connection.

In this description, the terms "advertisement," "ad," and "commercial" are used interchangeably.

Traditional marketing campaigns may not be effective. A few examples of traditional marketing campaigns are billboards, television ads, radio ads, print ads, banner ads, movie trailers, *etc.* Traditional marketing campaigns are generally not interactive with the consumer *i.e.* the consumer usually views the ad and then makes a decision to purchase the product (or not). There is little if almost no interactivity between the ad and the consumer. However, interactivity between the consumer and the ad can be beneficial because interactivity may increase the effectiveness of the marketing campaign. Viral marketing is a form of a marketing campaign that, by its nature, requires more interaction between the consumer and the advertisement. As such, the effectiveness of the viral marketing campaign may be greater than that of the traditional marketing campaign.

A viral marketing campaign has unique characteristics. A viral marketing campaign may require word-of-mouth communication between consumers. For example, a viral marketing campaign could entice consumers to share coupons online by making their own coupon effective only once the coupons are shared. Thus, the consumer is forced to share the coupon with his friends in order to reap the rewards of his own coupon. Further, the business offering the coupon has created a de facto coupon distribution effort amongst the business' own consumers, thereby, increasing the business' consumer-base. While the business may face diminished per unit profit in this example due to the coupon discount, the business has effectively increased the number of purchasing consumers as well as reached consumers the business might not have been able to otherwise target with traditional marketing campaigns. For instance, some consumers do not read print media or watch television; therefore, online viral marketing may be the only avenue to reach certain consumers. Viral marketing campaigns have the ability to spread like a pathological disease (hence the term "viral") because the viral marketing campaign has the potential to reach every consumer in the world if the viral marketing campaign is designed effectively.

Viral marketing campaigns are currently used by large media companies (e.g., Sony Pictures, Universal Studios, Viacom, *etc.*). Some viral marketing campaigns are designed to reach demographics that are difficult to reach with traditional marketing campaigns. For instance, young adults may not watch television or listen to radio. However, young adults may be active on the Internet. For instance, young adults are active on social networking sites such as MySpace and Facebook (among others). Therefore, a viral marketing campaign may be directed to such a demographic and, as such, may even utilize social networks to reach young adults.

Another example of a viral marketing campaign could be a promotional website which requests a wireless phone number from a user. The promotional website may then use the wireless phone number to send a Short Messaging Service ("SMS") message at an opportune time in order to get the user to visit the surprise opening of a local discotheque. The SMS might include directions as well as promotion coupons (*e.g.,* two for one cover fee coupons, which might entice the user to bring a friend).

Yet another example of a viral marketing campaign could be a game which would only allow the user to complete one level of the game. However, if the user pays a purchase price, the rest of the game might be unlocked such that the user could play the entire game. Further, the first level of the game could be freely shared with other users to entice them to purchase the full version of the game. Such a limited version of the game may be referred to as a "demo version" of the game. In an alternative aspect, participating in the demo version of the game might allow the user to receive a "bonus" level of the game that would be otherwise unavailable to a user who purchased the game from a retail store.

Viral marketing campaigns may require interaction with the user that is closely branded to the end-goal of the viral marketing campaign. For example, if a media company is attempting to promote the opening of *The Simpsons Movie,* the media company could require that viewers tune in every week to the new episode of the regular broadcast of *The Simpsons* television series in order to count the number of times Homer says "doh!" If the viewer successfully counts the number of times Homer says "doh!" over a four week period before the opening of the movie, then that person might receive a free box of popcorn for opening night (which may have a fifteen dollar value). Such a viral marketing campaign would not only drive up attendance for opening night but also increase the number of viewers of the episodic television series. In addition, the viral marketing campaign might create a "buzz" on the Internet as other media news services cover the viral marketing campaign. For instance, the number of times Homer says "doh!" could be top news on news.google.com, thus creating more free advertising for the media company.

What is needed are new forms of viral marketing campaigns to reach even more consumers. The following aspects are directed toward providing a new form of a viral marketing campaign to effectively reach more consumers by giving the consumers incentives to work together toward a common goal. The viral marketing campaign requires that at least two users participate in the completion of a common goal, where the common goal may not be completed by a single user acting alone. The completion of the common goal results in a reward being given to the users who participated in achieving the common goal. By requiring the at least two users to work together toward the common goal, the viral marketing campaign can reach more users because the users themselves have an incentive to recruit even more users to the assist in the completion of the common goal. Any entity which promotes goods and services can benefit from this new form of viral marketing campaign. For instance, large media companies (e.g., Disney, Universal Pictures, Sony Pictures, *etc.*) could benefit greatly from utilizing this new form of viral marketing campaign.

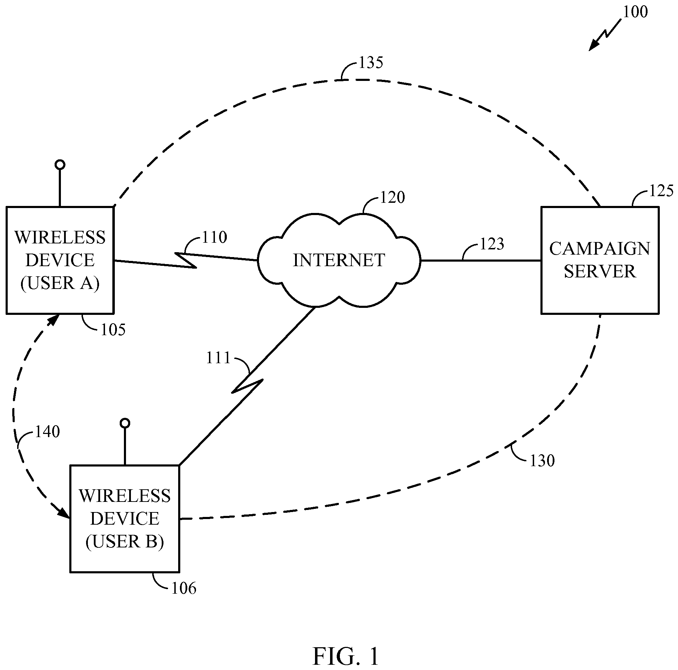

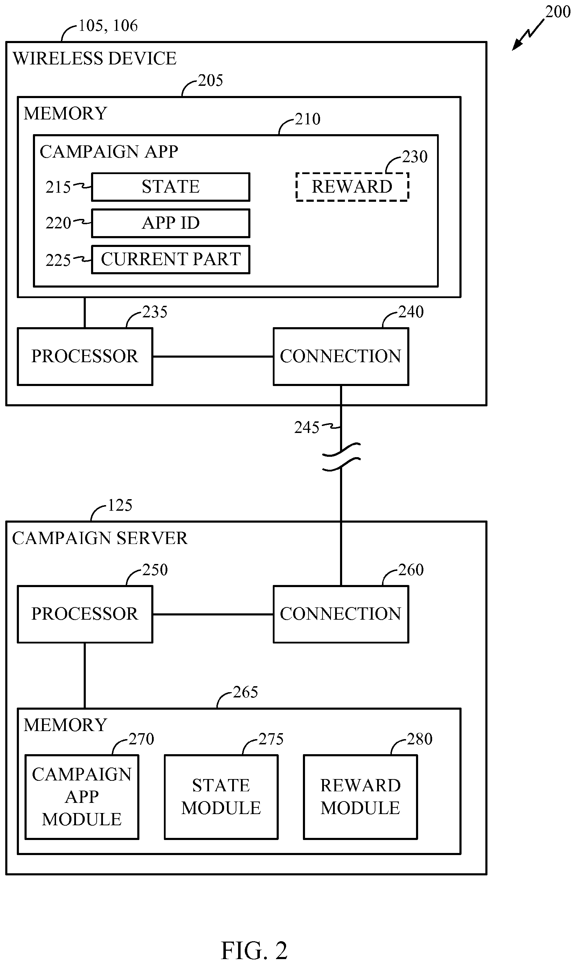

FIG. 1 depicts a viral marketing system 100. A wireless device 105 is presented which is owned by a User A (not shown). The wireless device is connected to the Internet 120 by a link 110. A wireless device 106 is also provided which is owned by a second user, User B (not shown). The wireless device 106 is connected to the Internet 120 by a link 111. A campaign server 125 is provided and is connected to the Internet 120 by a link 123. The wireless devices 105, 106 may connect directly to each other using a link 140. For example, the links 110, 111, 123, 140 may be utilized for superdistribution of data as discussed in FIG. 2 *infra.*

The links 110, 111, 123, 140 may be provided by a wireless network operator or a third party. The wireless network operator owns the infrastructure and any licenses to operate the wireless communication technology. Examples of wireless network operators in the United States are Verizon, Sprint, and AT&T. However, some wireless technologies are operated by the third party, which owns infrastructure and may not require a license to operate certain wireless technologies (*e.g.*, WiFi). For instance, the links 110, 111, 123, 140 could be facilitated by a WiFi hotspot at a local coffee shop (*e.g.*, Starbucks). The viral marketing system 100 could operate across the links 110, 111, 123, 140 whether hosted by the wireless network operator or the third party.

The wireless devices 105, 106 are identical devices. The distinction between the wireless device 105 and the wireless device 106 is provided for convenience and illustrative purposes only. Further, each wireless device 105, 106 is assigned to a unique user for illustrative purposes (*e.g.*, User A for wireless device 105 and User B for wireless device 106). In one aspect, both wireless devices 105, 106 could be operated by the same user. In another aspect, the users may not be required altogether as the wireless device 105, 106 may be capable of interacting in the viral marketing system 100 without user assistance (*i.e.,* machine-to-machine interaction).

The wireless device 105 operated by User A may access the campaign server 125 by connecting to the Internet 120 via the link 110 and further connecting to the campaign server 125 via the link 123. Similarly, the wireless device 106 operated by User B could access the campaign server 125 by connecting to the Internet 120 via the link 111 and further connecting to the campaign server 125 via the link 123. Alternatively, the wireless device 105 could connect to the campaign server 125 directly via the link 135. For example, the campaign server 125 could operate in a localized fashion without requiring the wireless device 105 to utilize the Internet 120 for connectivity. In one aspect, the link 135 could be a local WiFi hotspot operated within a retail store; therefore, the wireless device 105 may have to be physically within the retail store in order to participate in the viral marketing campaign. Likewise, the second wireless device 106 has a link 130 to the campaign server 125 where the link 130 does not require connectivity through the Internet 120. The link 130 is similar in all respects to the link 135. The interaction between the wireless devices 105, 106 is described further in FIG. 2, FIG. 3, and FIG. 4, *infra.*

In one aspect, the links 110, 111, 123, 130, 135, 140 could be implemented using code division multiplexed access ("CDMA"), time division multiplexed access ("TDMA"), frequency division multiplexed access ("FDMA"), orthogonal frequency division multiplexed access ("OFDMA"), global system for mobile communications ("GSM"), Analog Advanced Mobile Phone System ("AMPS"), Universal Mobile Telecommunications System ("UMTS"), 802.11a/b/n ("WiFi"), World Interoperability for Microwave Access ("WiMAX"), Bluetooth, or other wireless communication technology.

FIG. 2 depicts a block diagram 200 which illustrates a detailed view of the wireless devices 105, 106 as well as the campaign server 125. The wireless devices 105, 106 have a memory 205, a processor 235 and a connection 240. The memory 205 may be capable of storing computer-readable instructions. Further, the memory 205 may be capable of storing an operating system and applications, both of which may be embodied as modules. The memory 210 may contain a campaign app 210 (*i.e.,* campaign application).

The campaign app 210 provides the interaction between the wireless devices 105, 106 and the viral marketing campaign. The campaign app 210 may have a number of parts which need to be completed in order to unlock the reward 230. The completion of each part can be stored in a state 215, and is described in more detail *infra.* Further, the campaign app 210 may record additional information to the state 215.

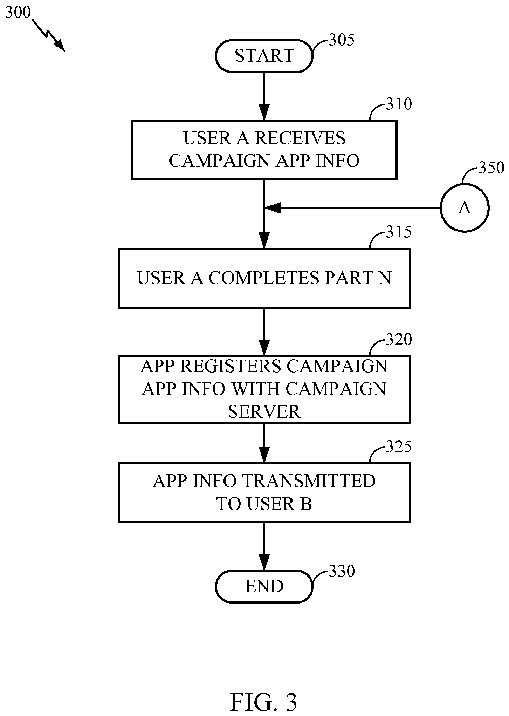

In one aspect, the campaign app 210 could be a game. Further, the game may require that more than one wireless device participate in the completion of the game. For instance, the wireless device 105 may be required to complete the first level and the wireless device 106 may be required to complete the final level. After completion of the final level, the wireless devices 105, 106 may be entitled to a reward 230 for their cooperative completion of the game. One of skill in the art will appreciate that the game could have multiple levels requiring more than one wireless device 105, 106 to participate (*e.g.*, a game with sixty levels may require participation by sixty wireless devices to unlock the reward 230). The process of more than one wireless device participating in a viral marketing campaign is discussed in FIG. 3, FIG. 4 and FIG. 5 *infra.*

In another aspect, the theme of the campaign app 210 is closely tied to a marketing goal of a media company trying to promote some event. For instance, in anticipation of the release of the Spiderman movie, the campaign app 210 could require that users complete a scavenger hunt within a fixed amount of time. In order to complete the scavenger hunt, the users might need to take one thousand pictures of different spiders within a twenty-four hour period. The campaign app 210 could then transmit the pictures to a promotional website, which displays the various pictures of spiders taken by cameras on the wireless devices 105, 106. Non-participating users could visit the promotional website to track the scavenger hunt. In one aspect, the promotional website could try to get non-participating users to join the scavenger hunt and become participants. The campaign app 210 could unlock the reward 230 when one thousand pictures of spiders have been transmitted to the promotional website. Therefore, the users have an incentive to be the first ones to take a picture of a spider and then pass the campaign app 210 along to a friend to take another picture of a spider. The more friends the campaign app 210 reaches, the better the chances are of being both among the first one thousand users and completing the scavenger hunt within the specified period. One of skill in the art will appreciate that the scavenger hunt's parameters could be modified to promote any conceivable type of event. However, the scavenger hunt should require the participation of at least two users to complete the hunt in order to induce the users to work together toward a common goal.

The campaign app 210 has the state 215, an app ID 220, a current part 225, and, optionally, the reward 230. The state 215 stores which parts of the campaign app 210 have been completed. For instance, the state 215 may indicate that the campaign app 210 has a total of ten parts to be completed, of which parts one through three are currently completed, where parts four through ten still need to be completed. In one aspect, the state 215 could record additional information besides simply indicating whether the part is complete or incomplete. For instance, the campaign app 210 could be a series of trivia questions, and the state 215 could record the answers to each trivia question (*i.e.* part) in addition to indicating whether or not each question has been completed. Further, at a later time, the answers within the state 215 could be evaluated to determine their correctness. Other information that may be contained in the state 215 could include (but is not limited to): time, date, user identification information, location information, device information, *etc.* One of skill in the art could associate conceivably any other data with the state 215 in addition to the information enumerated *supra.*

The app ID 220 provides the identification of the campaign app 210. For instance, the campaign server 125 may need to differentiate between multiple, various campaign apps 210, which may reside on one or more wireless devices 105, 106. Further, the app ID 220 may be used by the wireless devices 105, 106 in order to differentiate between multiple campaign apps 210 resident on the wireless device 105, 106. In one aspect, the app ID 220 could be used to determine which campaign app 210 needs to be downloaded to the wireless device 105, 106 if the wireless device 105, 106 only receives campaign app information and not the complete campaign app 210. Campaign app information is discussed in more detail *infra.*

The current part 225 indicates to the campaign app 210 which portion of the campaign app 210 is currently unlocked. Referring back to the aspect where the campaign app 210 is a game, the current part 225 could indicate which level is currently unlocked and ready to play on the wireless device 105, 106. When the wireless device 105, 106 completes the level, the current part 225 will be updated to indicate that the next level is now unlocked. The process of unlocking parts of the campaign app 210 is discussed in more detail in FIG. 3, FIG. 4, and FIG. 5 *infra.*

The reward 230 is given to at least one user for completing all parts of the campaign app 210. In one aspect, if all parts of the campaign app 210 are completed, then all users receive the reward 230. However, in another aspect, the reward 230 may be selectively given only to certain users. In another aspect, the reward 230 could be closely tied to a marketing brand. For example, the campaign app 210 could be directed to promote yet another sequel of the Spiderman movies (*e.g.*, Spiderman 8: Spiderman and Spider-Ham Hit the Streets). The campaign app 210 could ask trivia questions about the comic book hero Spider-Ham, the short-lived sidekick to the Amazing Spiderman. The reward 230 could be a promotion code which could grant the users of the wireless devices 105, 106 free tickets to an advance showing of the movie. Note that by participating in the viral marketing campaign, each user is entitled to the receive the reward 230 in this aspect One of skill in the art could devise alternative aspects in which the rewards 230 are reduced or increased based on user participation or other factors.

The reward 230 could be (but is not limited to) any of one of the following: cash prizes, store credit, tickets, coupons, memorabilia, redeemable promotional codes, autographed merchandise, souvenirs, moderately-priced alcohol, vouchers, free wireless network airtime, frequent flier miles, stocks, bonds, gift cards, *etc.* One of skill in the art could devise other goods or services to give to the users as the reward 230, and the foregoing list should not be exclusive but rather illustrative.

In another aspect, the reward 230 could be a voucher to purchase a limitedly available gaming console, such as the Nintendo Wii. Assume that the demand for the Nintendo Wii exceeds the availability of the console in retail stores. The campaign app 210 could be a game that requires two people to complete a portion of a puzzle together. Once the portion of the puzzle is completed, the game may be passed to two new users who will then complete the next portion of the puzzle together. Once the entire puzzle is completed (*i.e.,* all parts of the campaign app 210 are complete), then the reward 230 could be a voucher to purchase a reserved Nintendo Wii at a local retailer. Nintendo could benefit from such a viral marketing campaign because local media and Internet media might report the viral marketing campaign as news. Further, online user communities dedicated to the Nintendo Wii might report the viral marketing campaign, which would both drive participation in the viral marketing campaign as well as promote general awareness of the gaming console to those who are not participating in the viral marketing campaign.

It one aspect, the reward 230 may be resident within the campaign app 210 itself. However, the reward 230 could be locked such that the user may not access the reward 230 until all parts of the campaign app 210 are completed. The reward 230 is depicted with a dotted line to denote that the reward 230 could be optionally retained on the campaign server 125, the reward 230 only being transmitted when all parts of the campaign app 210 are completed. In one aspect, the reward 230 could be located on a server hosted by a third-party, and the reward 230 could be delivered by the third-party at the appropriate time.

The processor 235 is capable of executing computer-readable instructions stored in the memory 210. In one aspect, the processor 235 is capable of executing the campaign app 210.

The connection 240 provides connectivity to the Internet 120 and the campaign server 125 over a link 245. The link 245 may be analogous to the links 110, 111, 130, and 135 from FIG. 1 *supra* and is provided here for convenience. The connection 240 may be capable of using any of the technologies stated in FIG. 1 with reference to the links 110, 111, 130, 135 and 140.

The campaign server 125 contains a processor 250, a connection 260 and a memory 265. The connection 260 is similarly connected via the link 245 to the wireless device 105, 106. Similar to the connection 240 of the wireless device 105, 106, the connection 260 is capable of utilizing any of the technologies described in FIG. 1 with reference to the links 110, 111, 123, 130, 135, and 140.

The processor 250 is capable of executing computer-readable instructions stored in the memory 265. In one aspect, the processor 250 is capable of executing a campaign app module 270, a state module 275, and a reward module 280, all of which may be stored in the memory 265.

The campaign app module 270 contains the campaign app 210 that may be deployed to the wireless devices 105, 106. In one aspect, the campaign app module 270 contains more than one campaign app 210, where each campaign app 210 is directed toward a unique viral marketing campaign. Each campaign app 210 may have its own unique app ID 220 as stated *supra.*

The state module 275 stores and manages the current state of the campaign app 210. In one aspect, the state module 275 stores and manages the states of multiple campaign apps 210. The state module 275 may be operable to process any additional information that may associated with the state 215. As previously stated, the state 215 could store the answers to a series of trivia questions; the state module 275 could evaluate the answers to the completed trivia questions in order to determine whether or not the given answers are correct.

The reward module 280 stores and manages the reward 230 for completing parts of the campaign app 210. The state module 275 may communicate with the reward module 280 in order to determine if the campaign app 210 has completed a sufficient number of parts to be eligible to receive the reward 230. In one aspect, the reward module 280 may provide the rewards on a "first in, first out" basis (*i.e.* "FIFO"), wherein the first users to participate in the completion of the campaign app 210 receive the reward 230. For instance, two thousand users may have participated in the completion of the campaign app 210; however, the reward module 280 may limit the number of rewards 230 given to the first one hundred users who particpated. Thus, the reward module 230 allows one of skill in the art to manage and control the distribution of the reward 230, which provides for a customizable viral marketing campaign.

FIG. 3 is a flowchart illustrating a process 300 of the wireless device 105 participating in a viral marketing campaign. The process 300 addresses the completion of the first part of the campaign app 210. The wireless device 105 may have the campaign app 210 already installed prior to the initiation of the process 300. In one aspect, the campaign app 210 could be downloaded to the wireless device 105 from the campaign server 125 or another server hosted by a third party. In one aspect, the campaign app 210 could be received by the wireless device 105 via a WAP Push. One of skill in the art may utilize well-known superdistribution methods to transmit or receive the campaign app 210.

Superdistribution is the process of freely transmitting "superdistribution data" from one device to another. Superdistribution data could be software, video, audio, or other data. The superdistribution data may be transmitted from one device to another via Bluetooth, Infrared Data Association ("IrDA"), Short Messaging Service ("SMS"), Multimedia Messaging Service ("MMS"), WiFi, *etc.* The superdistribution data may be encrypted or unencrypted. Encrypted superdistribution data may be encrypted using Open Mobile Alliance Digital Rights Management ("OMA DRM"), public key infrastructure ("PKI"), FairPlay DRM, OpenMG, Windows Media DRM, Windows Media DRM for Portable Devices (*a.k.a.* "Janus"), or any other similar technology. Superdistribution data may require authentication with another device or remote server before being accessible. Further, superdistribution data may become unusable after the occurrence or non-occurrence of an event. For instance, after a defined date and time, the superdistribution data could become inaccessible (*i.e.* expire).

The process 300 begins at start block 305 and proceeds to block 310 where the wireless device 105 receives the campaign app information. The campaign app information (*i.e.* campaign application information) is any data related to the completion of the parts of the campaign app 210. In one aspect, the campaign app information contains information sufficient to identify the campaign app 210 with which the campaign app information is associated. In another aspect, the campaign app information could be the state 215, the app ID 220 and the current part 225, all of which are discussed in FIG. 2 *supra.* In one aspect, the campaign app information could contain data sufficient to identify the wireless device 105, 106. The receiving of campaign app information may allow the campaign app 210 to determine which part of the campaign app 210 is currently unlocked and ready for completion by the user. In one aspect, the campaign app information defines which level of a game is currently unlocked and ready to be played. At this point in the process 300, the current part 225 may be the first part for illustrative purposes.

Proceeding to block 315, User A of the wireless device 105 completes the first part (*i.e.* Part N) of the campaign app 210. Part N shall refer to the first part of the campaign app 210 that is to be completed by User A's wireless device 105. Subsequent parts may be referred to as Part N+1, Part N+2, and so on. The campaign app 210 may store information in the state 215 indicating that User A completed the first part of the campaign app 210. In one aspect, User A's wireless device 105 is prohibited from completing any parts after the first part, thus giving User A an incentive to transmit the campaign app 210 to a second user such that the second user can unlock the next part. In one aspect, the second user could be User B, the owner of wireless device 106.

Proceeding to block 320, the campaign app registers campaign app information with the campaign server 125. In one aspect, the app ID 220 is included to further identify the state 215 with a particular campaign app 210. Additional data may also be transmitted to the campaign server 125 as part of the campaign app information, including (but not limited to) a Mobile Subscriber ISDN Number ("MSISDN"), an IP of the wireless device 105, a MAC address of the wireless device 105, a login/password combination, public/private key combination, *etc.*

Proceeding to block 325, the campaign app information is transmitted to the wireless device 106, which is operated by User B. As previously stated, the campaign app information could be the state 215, the app ID 220, and the current part 225. In one aspect, the campaign server 125 may receive the state 215 from User A's wireless device 105 and then transmit the state 215 to User B's wireless device 106. In another aspect, User A's wireless device 105 could directly transmit the state 215 to User B's wireless device 106. The state 215 received by User B's wireless device 106 may indicate that the subsequent part of the campaign app 210 is unlocked. For instance, if the campaign app 210 is a game, User A's wireless device 105 could complete the first level at block 315, and the state 215 and current part 225 could be updated to indicate that the second level is available for play on User B's wireless device 106. In one aspect, the campaign app 210 is transmitted with the campaign app information; for instance, the campaign app 210 may need to be installed on User B's wireless device 106.

In one aspect, the campaign app information could be transmitted to a plurality of wireless devices 106. For instance, User A of wireless device 105 could transmit the campaign app information to all contacts contained in the contact database of the wireless device 105. Thus, every contact in the contact database that is associated with a wireless device 105, 106 could receive a WAP Push to participate in the viral marketing campaign. Providing integration between the campaign app 210 and the contact database could enable the user to easily recruit more people to participate in the completion of the campaign app 210, thus accomplishing the goal of increasing the reach of the viral marketing campaign. In one aspect, the campaign app information could be transmitted to the plurality of wireless devices 106 using superdistribution. Referring to FIG. 1, the campaign app 210 could transmit campaign application information over any of the links 110, 111, 123, 130, 135, 140.

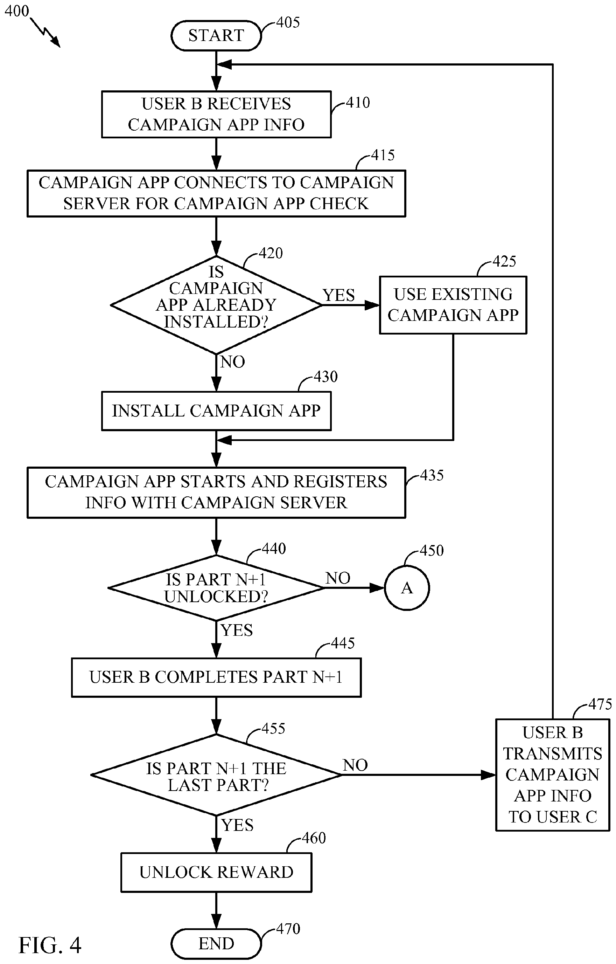

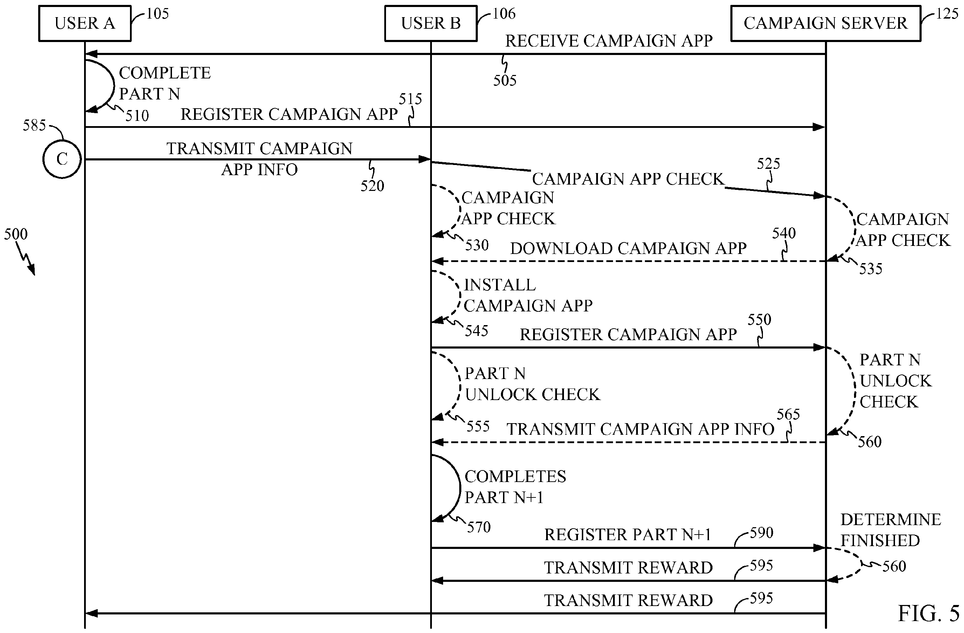

The process 300 proceeds to end block 330 at which point process 300 terminates. The completion of the process 300 bootstraps the viral marketing campaign. FIG. 4 and FIG. 5 *infra* present the subsequent processes for completion of the viral marketing campaign.

FIG. 4 is a flowchart illustrating a process 400 of completing the viral marketing campaign. The process 400 begins under the assumption that the process 300 has already completed and the viral marketing campaign is boostrapped by User A's wireless device 105. The process 400 begins at start block 405 and proceeds to block 410 where User B's wireless device 106 receives the campaign app information. In one aspect, the wireless device 106 may receive the state 215, the app ID 220, and the current part 225. In another aspect, the campaign app 210 may be received by the wireless device 106 along with the campaign application information.

Proceeding to block 415, the wireless device 106 connects to the campaign server 125 in order to check the campaign app 210. In one aspect, the wireless device 106 transmits the campaign app information to the campaign server 125 as part of the check. In one aspect, the check determines whether or not the campaign app 210 is present on the wireless device 106. In another aspect, the wireless device 106 always requests that the campaign app 210 be transmitted to the wireless device 106 thus assuring that the latest version is installed in the wireless device 106. In one aspect, the campaign app 210 may not have been transmitted to the wireless device 106; however, the wireless device 106 could have a framework or a run-time environment which could nevertheless perform the check in block 415. In yet another aspect, the campaign app 210 may request updates to the campaign app 210 or any of the campaign application information.

The process 400 proceeds to decision block 420 at which point the wireless device 106, the campaign server 125 or a third party determine whether the campaign app 210 is installed on the wireless device 106. In one aspect, the campaign app information transmitted in block 415 could be sufficient for the campaign server 125 to determine whether or not the wireless device 106 has the campaign app 210 installed. For instance, the wireless device 106 could transmit its MSISDN at block 415, with which the campaign server 215 could check a module to determine whether or not the wireless device 106 has already received and installed the campaign app 210.

If the campaign app 210 is already installed, the process 400 proceeds down the YES branch to block 425 at which point the wireless device 106 utilizes the currently installed campaign app 210. Therefore, the campaign app 210 does not need to be retrieved from the campaign server 125 or another server. At block 425, the campaign app 210 may request any desired updates. The process 400 proceeds to block 435 at which point the campaign app 210 starts and the campaign app 210 registers campaign app information with the campaign server 125.

Going back to block 420, if the campaign app 210 is not installed on the wireless device 106, then the process 400 proceeds down the NO branch to block 430. At block 430, the wireless device 106 may receive the campaign app 210 from the campaign server 125 or another server. The wireless device 106 may then install the downloaded campaign app 210.

The process 400 proceeds to block 435 at which point the campaign app 210 starts execution and registers campaign app information with the campaign server 125. In one aspect, the campaign server 125 returns a new state 215 and a new current part 225 such that User B's wireless device 106 has the next incremental part of the viral marketing campaign. Going back to the example of the campaign app 210 being a game, the completion of the process 300 may unlock the first level; however the campaign app information transmitted to the wireless device 106 at block 410 only reflects that the first level was completed. The wireless device 106 may not have authorization yet to execute the second level of the game; however, the registration with the campaign server 125 may allow the wireless device 106 to unlock the second level and proceed toward completion of the campaign app 210.

Proceeding to decision block 440, a determination is made based on whether or not Part N+1 is unlocked. Part N+1 is used to define any part of the campaign app 210 that is subsequent to the first part (*i.e.* Part N). The campaign app information may store the status of which parts are completed (or not). In one aspect, the state 215 may store which parts are complete or incomplete. Referring back to the game example, Part N could be the first level, and Part N+1 could be the second level. The determination may be made on the wireless device 106, the campaign server 125 or by both the wireless device 106 and the campaign server 125. If Part N+1 is not unlocked, then Part N may not have been successfully completed by User A's wireless device 105 during the process 300. Therefore, the process 400 proceeds down the NO branch to block A 450, thus causing the process 400 to repeat the failed portions of the process 300 such that Part N becomes successfully completed. Note that block A 450 corresponds to block A 350 of FIG. 3.

Going back to block 440 of FIG. 4, the process 400 may proceed down the YES branch to block 445, if Part N+1 is unlocked. At block 445, User B completes Part N+1 on the wireless device 106 similarly to how User A completed Part N. For instance, User B could answer a trivia question, complete a level in a game, take a picture with the wireless device's 106 camera, *etc.*

Proceeding to decision block 455, a determination is made whether or not Part N+1 is the last part of the campaign app 210. The determination may be made by the wireless device 106, the campaign server 125 or both the wireless device 106 and the campaign server 125. The campaign app information may be used to make the determination whether or not Part N+1 is in fact the last part. Further, the state 215 may be used in one aspect. If Part N+1 is not the last part of the campaign app 210, then the viral marketing campaign is not finished; therefore, the process 400 proceeds to block 475. At block 475, User B's wireless device 106 transmits the campaign app information to User C's wireless device (not shown). User C represents any subsequent user after User B. Depending on the number of parts of the campaign app 210, the number of users subsequent to User B may vary. For instances, if the campaign app 210 is a game, and the game has 20 levels, then User A could complete level one, User B could complete level two, User C could complete level three, User D could complete level four, User E could complete level five, and so on until all twenty levels are completed. In this example, User T, the twentieth user in the sequence, would complete the last level and unlock the reward 230. Stated differently, process 400 will repeat from block 410 to block 455 until the last part is completed by the last user. One of skill in the art may tailor the number of parts to fit the desired viral marketing campaign.

Going back to block 455, if Part N+1 is the last part of the campaign app 210, then the process 400 proceeds down the YES branch to block 460. At block 460, the reward 230 may be unlocked. As previously stated, the reward 230 could be anything to encourage users to complete the campaign app 210. In one aspect, the campaign server 125 utilizes the reward module 280 to determine the proper reward 230 for the users. In another aspect, the reward 230 is given to all users who participated in completing at least one part of the campaign app 210. Thus, the users have an incentive to both complete each part given to them and seek out others to help complete the subsequent parts which cannot be completed by the first user alone.

The process 400 then proceeds to end block 470 at which point the process 400 terminates, thus completing the viral marketing campaign.

FIG. 5 is a sequence diagram illustrating a process 500, which interacts with the wireless devices 105, 106 and the campaign server 125. The process 500 is another non-limiting aspect of the process 300 and the process 400 depicted in FIG. 3 and FIG. 4 respectively. At operation 505, the campaign server 125 transmits the campaign app 210 to the wireless device 105 controlled by User A. At operation 510, User A completes Part N on the wireless device 105. The completion of Part N may be stored in the campaign app information, as previously stated. In one aspect, the completion of Part N could be stored in the state 215. At operation 515, the wireless device 105 transmits to the campaign server 125 the campaign app information. In one aspect, the campaign app information includes the state 215, the app ID 220, and the current part 225. At this point in the process 500, the current part 225 may be Part N, which indicates the first part is the one that has just been completed by the wireless device 105. In one aspect, the campaign server 125 could store the state 215 in the state module 275.

At operation 520, the wireless device 105 transmits the campaign app information to the wireless device 106, which is controlled by User B. In one aspect, only campaign app information is transmitted to the wireless device 106 controlled by User B. In another aspect, both the campaign app 210 and the campaign app information are transmitted to the wireless device 106 controlled by User B. In one aspect, the transmission to User B's wireless device 106 could be accomplished over the link 140 from FIG. 1. In another aspect, the campaign app information or campaign app 210 may be transmitted to User B's wireless device 106 via any of the superdistribution methods stated *supra.*

At operation 525, the wireless device 106 performs a check against the campaign server 125 in order to determine if any additional data is required. In one aspect, the wireless device 106 may require downloading and installation of the campaign app 210. At operation 535, the campaign server 125 may, in one aspect, perform the check to determine if the wireless device 106 requires the campaign app 210. In another aspect, the wireless device 106 itself may check to determine if it needs the campaign app 210, as shown by operation 530. Note that if operation 530 is utilized, the wireless device 105 might require support from another application, framework, platform, or operating system because the campaign app 210 may not be installed on the wireless device 106.

At operation 540, the campaign server 125 downloads the campaign app 210 to the wireless device 106 if a determination has been made that the wireless device 106 requires the campaign app 210 (hence the dotted operation line in FIG. 5). The campaign server 125 may optionally always require download of the campaign app 210 in order to ensure the latest version is installed on the wireless device 106. At operation 545, the wireless device 106 installs the campaign app 210, if necessary.

At operation 550, the campaign app information is registered with the campaign server 125. The campaign server 125 may then perform a check at operation 560 to determine if Part N was successfully completed by User A on wireless device 105. In one aspect, the check could be performed on the wireless device 106 as shown by operation 555. In one aspect, the campaign server 125 may return the campaign app information to the wireless device 106 as shown by operation 565. In another aspect, operation 565 is not required because the wireless device 106 already has the campaign app information.

At operation 570, the wireless device 106 has received the campaign app 210 and the appropriate campaign app information such that User B can complete Part N+1. Once Part N+1 is complete, the wireless device 106 may register with the campaign server 125 in order to indicate that User B completed Part N+1 on the wireless device 106 as indicated at operation 590. Then, the campaign server 125 may determine at operation 560 whether or not Part N+1 is the last part of the campaign app, as indicated by operation 560. The campaign server 125 may utilize the campaign app information in order to make its determination at operation 560. If Part N+1 is not the last part, then the process 500 jumps to block C 585, thus repeating operation 520 and the subsequent operations. The jump to block C 585 is similar to the transition from block 475 to block 410 in FIG. 4.

If Part N+1 is the last part of the campaign app 210, then the reward 230 is transmitted to the users as shown with operations 595, thus terminating the process 500. In one aspect, the reward 230 could be transmitted only to the wireless device 105. In another aspect, the reward 230 could be transmitted only to the wireless device 106. One of skill in the art may devise other schemes to distribute the reward 230 to the participants in the viral marketing campaign. In one aspect, the reward module 280 may be utilized to distribute the reward 230 to the wireless devices 105, 106 (as discussed in FIG. 2 *supra*). After distribution of the reward 230, the process 500 terminates.

While it has been shown that the process 300, the process 400, and the process 500 complete upon the distribution of the reward 230, there could be another aspect in which the reward 230 is distributed at milestones at any point in the processes 300, 400, 500. Any reward 230 given at milestones may be called a "milestone reward." For example, after User B's wireless device 106 completes Part N+1 at block 445 in FIG. 4, the process 400 could proceed to distribute the reward 230 to User A's wireless device 105 and User B's wireless device 106. Further, if User C later completes Part N+2, then User A, User B, and User C could receive the reward 230. Note that early participants (*e.g.,* User A and User B) may receive multiple milestone rewards. In another aspect, the any rewards 230 given to users before the completion of the process 300, 400, 500 could be simply given to the user who just completed the latest part. In yet another aspect, the reward 230 given at the end could be of greater value than the milestone rewards. For instance, the milestone rewards 230 could be coach airline tickets whereas the final reward 230 could be a first-class airline ticket. One of skill in the art will appreciate that the rewards 230 need not be distributed only at the end of the process 300, 400, 500, and one of skill in the art could easily devise a number of milestones appropriate for distribution of the milestone reward 230.

One of skill in the art may appreciate that security may be a concern for the user of the wireless device 105, 106, the wireless network operator, the entity promoting the viral marketing campaign, or any other third party. As such, one of skill in the art could employ well-known security measures to prevent spoofing, hacking, phreaking, social engineering, or other compromise of data. For example, the wireless network operator could require that Secure Socket Layer ("SSL") be utilized for any connections between the wireless device 105, 106 and the campaign server 125. One of skill in the art may additionally employ digital rights management ("DRM") techniques to protect data against illegal copying.

While the foregoing examples have illustrated the campaign app 210 interacting with the campaign server 125, one of skill in the art could devise a system in which the campaign app 210 does not require interaction with the campaign server 125. For instance, the campaign app 210 could be completely self-reliant by having the reward 230 contained within the campaign app 210 initially. As such, the campaign app 210 may not need to connect to any servers. For example, the campaign app 210 could be the well-known "Hangman" game where users guess which letters are missing from a mystery word. In Hangman, the users receive a predetermined number of guesses before the person is "hanged," and the game ends. In one aspect, the hangman game could be played on the wireless device 105 by User A, who could guess one letter. After User A guesses, the campaign app 210 could be transferred via any superdistribution method (described *supra*) to User B's wireless device 106. Play would continue as each user passes the game to another user. Once the campaign app 210 is complete *i.e.* the users successfully guess the mystery word, then the reward 230 could be unlocked. In one aspect, after the reward 230 is unlocked, the campaign app 210 or reward 230 could be superdistributed to any of the users so that they may receive the reward 230 as well.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that may be accessed by a computer. By way of example, and not limitation, such computer-readable media may comprise RAM, ROM, EEPROM, CD-ROM or other optical disk storage, magnetic disk storage or other magnetic storage devices, or any other medium that may be used to carry or store desired program code in the form of instructions or data structures and that may be accessed by a computer. Also, any connection is properly termed a computer-readable medium. For example, if the software is transmitted from a website, server, or other remote source using a coaxial cable, fiber optic cable, twisted pair, digital subscriber line ("DSL"), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc ("CD"), laser disc, optical disc, digital versatile disc ("DVD"), floppy disk, High Definition DVD ("HD-DVD") and Blu-ray disc where disks usually reproduce data magnetically, while discs reproduce data optically with lasers. Combinations of the above should also be included within the scope of computer-readable media.

## Claims

1. A method of transmitting an application to a wireless device, the method comprising:
receiving (310) an application on a first wireless device (105) from a server, the application having a plurality of parts, the plurality of parts having at least a first part and a second part, the first part being operable to be executed on the first wireless device, the second part being operable to be executed on a second wireless device (106), wherein after executing the first part of the plurality of parts, the first wireless device is prevented from executing the second part of the plurality of parts, wherein the first or second wireless device is operable to receive a reward (230) when each part of the plurality of parts is completed;
executing (315) the first part of the plurality of parts on a processor of the first wireless device;
transmitting (325) a first application information to the second wireless device, wherein the first application information indicates the first part of the plurality of parts is executed, further wherein the first application information is associated with the application (210);
transmitting (430) the application (210) to the second wireless device based on the first application information; wherein upon the second wireless device receiving the first application information and the application and the second wireless device has determined from the first application information that the first wireless device has executed the first part of the plurality of parts the second wireless device is arranged to execute the second part of the plurality of parts.

2. The method of claim 1, further comprising:
receiving a milestone reward at the first wireless device (105) when the first part of the plurality of parts is completed on the first wireless dcvicc.

3. The method of claim 1, further comprising:
transmitting (475) a second application information, the second application information indicating that the second part of the plurality of parts is executed; and
receiving (460) the reward at the first or second wireless device when every part of the plurality of parts is completed.

4. A system, comprising:
means for receiving from a server an application (210) on a first wireless device (105), the application having a plurality of parts, the plurality of parts having at least a first part and a second part, the first part being operable to be executed on the first wireless device, the second part being operable to be executed on a second wireless device (106), wherein after executing the first part of the plurality of parts, the first wireless device is prevented from executing the second part of the plurality of parts, wherein the first or second wireless device is operable to receive a reward when each part of the plurality of parts is completed;
means for executing the first part of the plurality of parts on the first wireless device;
means for transmitting a first application information to the second wireless device, wherein the first application information indicates the first part of the plurality of parts is completed, further wherein the first application information is associated with the application; and
means for transmitting the application to the second wireless device based on the first application information, wherein upon the second wireless device receiving the first application information and the application and the second wireless device has determined from the first application information that the first wireless device has executed the first part of the plurality of parts the second wireless device is arranged to execute the second part of the plurality of parts.

5. The system of claim 4, wherein the first wireless device (106) comprises:
a transceiver operable to transmit and receive an application (210), a first application information, or a reward (230);
a memory operable to store the application, the first application information, or the reward;
a processor operable to execute the application.

6. The system of claim 4, further comprising:
means for receiving a milestone reward at the first wireless device (105) when the first part of the plurality of parts is completed on the first wireless device.

7. The system of claim 4, further comprising:
means for transmitting (430) the application (210) to the second wireless device based on the first application information.

8. A computer program product comprising a computer-readable medium, the computer-readable medium comprising at least one instruction for causing a computer to perform a method in accordance with any one of claims 1 to 3.

## Patentansprüche

1. Ein Verfahren zum Senden einer Anwendung an eine Drahtloseinrichtung, wobei das Verfahren Folgendes aufweist:
Empfangen (310) einer Anwendung an einer ersten Drahtloseinrichtung (105) von einem Server, wobei die Anwendung eine Vielzahl von Teilen hat, wobei die Vielzahl von Teilen wenigstens einen ersten Teil und einen zweiten Teil hat, wobei der erste Teil betriebsmäßig einsetzbar ist, um auf der ersten Drahtloseinrichtung ausgeführt zu werden, wobei der zweite Teil betriebsmäßig einsetzbar ist um auf einer zweiten Drahtloseinrichtung (106) ausgeführt zu werden, wobei nach Ausführen des ersten Teils der Vielzahl von Teilen die erste Drahtloseinrichtung daran gehindert wird den zweiten Teil der Vielzahl von Teilen auszuführen, wobei die erste oder zweite Drahtloseinrichtung betreibbar sind zum Empfangen einer Gegenleistung bzw. Belohnung (230), wenn jeder Teil der Vielzahl von Teilen abgeschlossen ist;
Ausführen (315) des ersten Teils der Vielzahl von Teilen auf einem Prozessor der ersten Drahtloseinrichtung;
Senden (325) einer ersten Anwendungsinformation an die zweite Drahtloseinrichtung, wobei die erste Anwendungsinformation anzeigt, dass der erste Teil der Vielzahl von Teilen ausgeführt wird, wobei weiter die erste Anwendungsinformation mit der Anwendung (210) assoziiert ist;
Senden (430) der Anwendung (210) an die zweite Drahtloseinrichtung basierend auf der ersten Anwendungsinformation; wobei darauf hin, dass die zweite Drahtloseinrichtung die erste Anwendungsinformation und die Anwendung empfängt und die zweite Drahtloseinrichtung aus der ersten Anwendungsinformation bestimmt hat, dass die erste Drahtloseinrichtung den ersten Teil der Vielzahl von Teilen ausgeführt hat, die zweite Drahtloseinrichtung ausgelegt ist zum Ausführen des zweiten Teils der Vielzahl von Teilen.

2. Verfahren nach Anspruch 1, das weiter Folgendes aufweist:
Empfangen einer Zwischenziel- bzw. Meilensteinbelohnung an der ersten Drahtloseinrichtung (105), wenn der erste Teil der Vielzahl von Teilen auf der ersten Drahtloseinrichtung abgeschlossen ist.

3. Verfahren nach Anspruch 1, das weiter Folgendes aufweist:
Senden (475) einer zweiten Anwendungsinformation, wobei die zweite Anwendungsinformation anzeigt, dass der zweite Teil der Vielzahl von Teilen ausgeführt wird; und
Empfangen (460) der Gegenleistung bzw. Belohnung an der ersten oder der zweiten Drahtloseinrichtung, wenn jeder Teil der Vielzahl von Teilen abgeschlossen ist.

4. Ein System, das Folgendes aufweist:
Mittel zum Empfangen, von einem Server, einer Anwendung (210) an einer ersten Drahtloseinrichtung (105), wobei die Anwendung eine Vielzahl von Teilen hat, wobei die Vielzahl von Teilen wenigstens einen ersten Teil und einen zweiten Teil hat, wobei der erste Teil betriebsmäßig einsetzbar ist, um auf der ersten Drahtloseinrichtung ausgeführt zu werden, wobei der zweite Teil betriebsmäßig einsetzbar ist um auf einer zweiten Drahtloseinrichtung (106) ausgeführt zu werden, wobei nach Ausführen des ersten Teils der Vielzahl von Teilen die erste Drahtloseinrichtung daran gehindert wird den zweiten Teil der Vielzahl von Teilen auszuführen, wobei die erste oder zweite Drahtloseinrichtung betreibbar sind zum Empfangen einer Gegenleistung bzw. Belohnung, wenn jeder Teil der Vielzahl von Teilen abgeschlossen ist;
Mittel zum Ausführen des ersten Teils der Vielzahl von Teilen auf der ersten Drahtloseinrichtung;
Mittel zum Senden einer ersten Anwendungsinformation an die zweite Drahtloseinrichtung, wobei die erste Anwendungsinformation anzeigt, dass der erste Teil der Vielzahl von Teilen abgeschlossen ist, wobei weiter die erste Anwendungsinformation mit der Anwendung assoziiert ist; und
Mittel zum Senden der Anwendung an die zweite Drahtloseinrichtung basierend auf der ersten Anwendungsinformation, wobei darauf hin, dass die zweite Drahtloseinrichtung die erste Anwendungsinformation und die Anwendung empfängt und die zweite Drahtloseinrichtung aus der ersten Anwendungsinformation bestimmt hat, dass die erste Drahtloseinrichtung den ersten Teil der Vielzahl von Teilen ausgeführt hat, die zweite Drahtloseinrichtung ausgelegt ist zum Ausführen des zweiten Teils der Vielzahl von Teilen.

5. System nach Anspruch 4, wobei die erste Drahtloseinrichtung (106) Folgendes aufweist:
einen Transceiver, der betreibbar ist zum Senden und Empfangen einer Anwendung (210), einer ersten Anwendungsinformation oder einer Gegenleistung bzw. Belohnung (230);
einen Speicher, der betreibbar ist zum Speichern der Anwendung, der ersten Anwendungsinformation oder der Belohnung;
einen Prozessor, der betreibbar ist zum Ausführen der Anwendung.

6. System nach Anspruch 4, das weiter Folgendes aufweist:
Mittel zum Empfangen einer Zwischenziel- bzw. Meilensteinbelohnung an der ersten Drahtloseinrichtung (105), wenn der erste Teil der Vielzahl von Teilen auf der Drahtloseinrichtung abgeschlossen ist.

7. System nach Anspruch 4, das weiter Folgendes aufweist:
Mittel zum Senden (430) der Anwendung (210) an die zweite Drahtloseinrichtung basierend auf der ersten Anwendungsinformation.

8. Ein Computerprogrammprodukt, das ein computerlesbares Medium aufweist, wobei das computerlesbare Medium wenigstens einen Befehl aufweist, um einen Computer zu veranlassen zum Durchführen eines Verfahrens gemäß einem der Ansprüche 1 bis 3.

## Revendications

1. Un procédé de transmission d'une application à un dispositif sans fil, le procédé comprenant :
la réception (310) d'une application sur un premier dispositif sans fil (105) à partir d'un serveur, l'application possédant une pluralité de parties, la pluralité de parties possédant au moins une première partie et une deuxième partie, la première partie étant conçue de façon à être exécutée sur le premier dispositif sans fil, la deuxième partie étant conçue de façon à être exécutée sur un deuxième dispositif sans fil (106), où, après l'exécution de la première partie de la pluralité de parties, le premier dispositif sans fil est empêché d'exécuter la deuxième partie de la pluralité de parties, où le premier ou le deuxième dispositif sans fil est conçu de façon à recevoir une récompense (230) lorsque chaque partie de la pluralité de parties est achevée,
l'exécution (315) de la première partie de la pluralité de parties sur un processeur du premier dispositif sans fil,
la transmission (325) de premières informations d'application au deuxième dispositif sans fil, où les premières informations d'application indiquent que la première partie de la pluralité de parties est exécutée, où en outre les premières informations d'application sont associées à l'application (210),
la transmission (430) de l'application (210) au deuxième dispositif sans fil en fonction des premières informations d'application, où, après la réception par le deuxième dispositif sans fil des premières informations d'application et de l'application et que le deuxième dispositif sans fil a déterminé à partir des premières informations d'application que le premier dispositif sans fil a exécuté la première partie de la pluralité de parties, le deuxième dispositif sans fil est agencé de façon à exécuter la deuxième partie de la pluralité de parties.

2. Le procédé selon la Revendication 1, comprenant en outre :
la réception d'une récompense d'étape au niveau du premier dispositif sans fil (105) lorsque la première partie de la pluralité de parties est achevée sur le premier dispositif sans fil.

3. Le procédé selon la Revendication 1, comprenant en outre :
la transmission (475) de deuxièmes informations d'application, les deuxièmes informations d'application indiquant que la deuxième partie de la pluralité de parties est exécutée, et
la réception (460) de la récompense au niveau du premier ou du deuxième dispositif sans fil lorsque toutes les parties de la pluralité de parties sont achevées.

4. Un système, comprenant :
un moyen de réception à partir d'un serveur d'une application (210) sur un premier dispositif sans fil (105), l'application possédant une pluralité de parties, la pluralité de parties possédant au moins une première partie et une deuxième partie, la première partie étant conçue de façon à être exécutée sur le premier dispositif sans fil, la deuxième partie étant conçue de façon à être exécutée sur un deuxième dispositif sans fil (106), où, après l'exécution de la première partie de la pluralité de parties, le premier dispositif sans fil est empêché d'exécuter la deuxième partie de la pluralité de parties, où le premier ou le deuxième dispositif sans fil est conçu de façon à recevoir une récompense lorsque chaque partie de la pluralité de parties est achevée,
un moyen d'exécution de la première partie de la pluralité de parties sur le premier dispositif sans fil,
un moyen de transmission de premières informations d'application au deuxième dispositif sans fil, où les premières informations d'application indiquent que la première partie de la pluralité de parties est achevée, où en outre les premières informations d'application sont associées à l'application, et
un moyen de transmission de l'application au deuxième dispositif sans fil en fonction des premières informations d'application, où, après la réception par le deuxième dispositif sans fil des premières informations d'application et de l'application et que le deuxième dispositif sans fil a déterminé à partir des premières informations d'application que le premier dispositif sans fil a exécuté la première partie de la pluralité de parties, le deuxième dispositif sans fil est agencé de façon à exécuter la deuxième partie de la pluralité de parties.

5. Le système selon la Revendication 4, où le premier dispositif sans fil (106) comprend :
un émetteur-récepteur conçu de façon à émettre et recevoir une application (210), des premières informations d'application ou une récompense (230),
une mémoire conçue de façon à conserver en mémoire l'application, les premières informations d'application ou la récompense,
un processeur conçu de façon à exécuter l'application.

6. Le système selon la Revendication 4, comprenant en outre :
un moyen de réception d'une récompense d'étape au niveau du premier dispositif sans fil (105) lorsque la première partie de la pluralité de parties est achevée sur le premier dispositif sans fil.

7. Le système selon la Revendication 4, comprenant en outre :
un moyen de transmission (430) de l'application (210) au deuxième dispositif sans fil en fonction des premières informations d'application.

8. Un produit de programme informatique comprenant un support lisible par ordinateur, le support lisible par ordinateur contenant au moins une instruction destinée à amener un ordinateur à exécuter un procédé selon l'une quelconque des Revendications 1 à 3.
